# EUROPEAN PATENT APPLICATION

(11) **EP 4 503 755 A1**
(43) Date of publication of application: **05.02.2025**
(21) Application number: 23189202.7
(22) Date of filing: 02.08.2023
(51) Int. Cl.: H04W 48/18

(54) **EARLY USER EQUIPMENT CONTEXT TRANSFER IN L3 CALL SETUP**

(71) Applicant: Nokia Solutions and Networks Oy, 02610 Espoo (FI)
(72) Inventor: SCHEFCZIK, Hans Peter, Erlangen (DE); HABERLAND, Bernd, Stuttgart (DE); TOSEEF, Umar, Sachsenheim (DE)
(74) Representative: Nokia EPO representatives

(57) **Abstract**

A method and an apparatus to perform sending towards a communication network node, information comprising a radio resource control setup request message an add slice request of at least one requested slice for fulfillment of at least one service characteristic, receiving an indication of one of an acceptance or a rejection by the network node of each of the at least one requested slice. The method and the apparatus is configured to perform receiving information comprising, a radio resource control setup request message for call admission with a network device of the communication network, wherein the information comprises an add slice request indication of at least one requested slice for fulfillment of at least one service characteristic for the network device and, based on the receiving, determining one of an acceptance or a rejection by the network node of each of the at least one requested slice.

## Description

### TECHNICAL FIELD

This disclosure generally relates to a method and apparatus for a network device.

### BACKGROUND

A network slice is a logically separated network service that allows to fulfil certain service characteristics for a user equipment (LTE) device. Each network slice is uniquely identified by a single network slice selection assistance information (S-NSSAI). And the UE can request to join several slice types of a NSSAI list.

### SUMMARY

In another example aspect of the disclosure, there is an apparatus, such as a user equipment side apparatus, comprising: at least one processor; and at least one non-transitory memory storing instructions, that when executed by the at least one processor, cause the apparatus at least to: send, by the apparatus, towards a network node of a communication network, information comprising a radio resource control setup request message, wherein the information comprises an add slice request of at least one requested slice for fulfillment of at least one service characteristic for the apparatus; and based on the radio resource control setup request message, receive from the network node an indication of one of an acceptance or a rejection by the network node of each of the at least one requested slice.

In still another example aspect of the disclosure, there is a method, comprising sending, by the apparatus, towards a network node of a communication network, information comprising a radio resource control setup request message, wherein the information comprises an add slice request of at least one requested slice for fulfillment of at least one service characteristic for the apparatus; and based on the radio resource control setup request message, receiving from the network node an indication of one of an acceptance or a rejection by the network node of each of the at least one requested slice.

A further example embodiment is an apparatus and a method comprising the apparatus and the method of the previous paragraphs, wherein the indication comprises an indication of an association of a context to a slice specific distributed unit component, wherein the add slice request indication comprises an indication of a single slice the apparatus requests to join or an indication of a set of slices the apparatus requests to join, wherein the add slice request indication comprises an indication of service latency, wherein the indication of service latency comprises a single bit indicating one of delay-sensitivity or delay-tolerance, wherein the add slice request indication is sent using an information element, wherein the radio resource control setup request message is provided with a message 3 of a random access channel process associated with the radio resource control setup, wherein there is receiving from the network node an indication of one of an acceptance or a rejection by the network node of each of the at least one requested slice, wherein in case of rejection the indication is that all created resources for the rejected slices inside at least one distributed unit of the network node are released, wherein the notice is using one of a radio resource control release message or a next generation application protocol user equipment context release request message, wherein in case of acceptance the notice is that after at least one security setup step, the indication is that a radio resource reconfiguration will occur, and/or wherein there is, based on acceptance of at least one requested slice, receiving from the network node at least one of a call setup message or a radio resource control add slice response complete message.

A non-transitory computer-readable medium storing program code, the program code executed by at least one processor to perform at least the method as described in the paragraphs above.

In yet another example aspect of the disclosure, there is an apparatus comprising: means for sending, by the apparatus, towards a network node of a communication network, information comprising a radio resource control setup request message, wherein the information comprises an add slice request of at least one requested slice for fulfillment of at least one service characteristic for the apparatus; and based on the radio resource control setup request message, means for receiving from the network node an indication of one of an acceptance or a rejection by the network node of each of the at least one requested slice.

In accordance with the example embodiments as described in the paragraph above, at least the means for sending and receiving comprises a network interface, and computer program code stored on a computer-readable medium and executed by at least one processor.

In another example aspect of the disclosure, there is an apparatus, such as a network side apparatus, comprising: at least one processor; and at least one non-transitory memory storing instructions, that when executed by the at least one processor, cause the apparatus at least to: receive, from a network device of a communication network, information comprising a radio resource control setup request message, wherein the information comprises an add slice request indication of at least one requested slice for fulfillment of at least one service characteristic for the network device; based on the receiving, determine one of an acceptance or a rejection by the network node of each of the at least one requested slice; and send towards the network device an indication of the one of an acceptance or a rejection of each of the at least one requested slice.

In still another example aspect of the disclosure, there is a method, comprising: receiving, from a network device of a communication network, information comprising a radio resource control setup request message, wherein the information comprises an add slice request indication of at least one requested slice for fulfillment of at least one service characteristic for the network device; based on the receiving, determining one of an acceptance or a rejection by the network node of each of the at least one requested slice; and sending towards the network device an indication of the one of an acceptance or a rejection of each of the at least one requested slice.

A further example embodiment is an apparatus and a method comprising the apparatus and the method of the previous paragraphs, wherein the add slice request indication comprises an indication of a single slice the network device requests to join or an indication of a set of slices the network device requests to join, wherein the add slice request indication comprises an indication of service latency, wherein the indication of service latency comprises a single bit indicating one of delay-sensitivity or delay-tolerance, wherein the add slice request indication is received using an information element, wherein the radio resource control setup request message is received with a message 3 of a random access channel process associated with the radio resource control setup, wherein in case of rejection, the indication is that all created resources inside at least one of a first distributed unit or a second distributed unit of the network node are released, wherein the notice is using one of a radio resource control release message or a next generation application protocol user equipment context release request message, wherein in case of acceptance the notice is that after at least one security setup step, the indication is that a radio resource reconfiguration will occur, wherein the determining comprises after creation of a first signaling radio bearer in a first distributed unit, performing setup of a second signaling radio bearer at a first distributed unit slice for processing of a slice for the network device, wherein there is informing a control plane of a central unit user plane of the network node of a location of the first signaling radio bearer for the processing of the slice, wherein the determining comprises: based on a next generation application protocol user equipment initial context setup procedure determining the one of an acceptance or a rejection by the network node of each of the at least one requested slice; and sending with the next generation application protocol user equipment context release request message the indication of the one of an acceptance or a rejection, wherein the indication of the one of an acceptance or rejection is sent in a message 4 of a random access channel process associated with the radio resource control setup, and/or wherein there is sending, towards the network device, at least one of a call setup message or a radio resource control add slice response complete message.

A non-transitory computer-readable medium storing program code, the program code executed by at least one processor to perform at least the method as described in the paragraphs above.

In yet another example aspect of the disclosure, there is an apparatus comprising: means for receiving, from a network device of a communication network, information comprising a radio resource control setup request message, wherein the information comprises an add slice request indication of at least one requested slice for fulfillment of at least one service characteristic for the network device; means, based on the receiving, for determining one of an acceptance or a rejection by the network node of each of the at least one requested slice; and means for sending towards the network device an indication of the one of an acceptance or a rejection of each of the at least one requested slice.

A communication system comprising the network side apparatus and the user equipment side apparatus performing operations as described above.

### BRIEF DESCRIPTION OF THE DRAWINGS

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:
FIG. 1 illustrates a disaggregated radio access network (RAN) architecture;
FIG. 2A and FIG. 2B illustrate a fast L3 call setup, non-error case;
FIG. 3A and FIG. 3B illustrate a fast L3 call setup, error case;
FIG. 4A and FIG. 4B illustrate a second slice setup;
FIG. 5A and FIG. 5B illustrate a second slice setup, error case;
FIG. 6A and FIG. 6B illustrate an example implementation of a two-slice setup;
FIG. 7 illustrates a simplified block diagram of various electronic devices that are suitable for use in practicing the example embodiments of this disclosure; and
FIG. 8A and FIG. 8B each illustrate a method in accordance with example embodiments of the disclosure which may be performed by an apparatus.

### DETAILED DESCRIPTION

In example embodiments of this disclosure there is proposed at least a method and apparatus for a user equipment to communicate slice preferences during an early phase of a random access channel process, such as where there is proactive association of the network device context to a slice-specific distributed unit (DU) component and can be done before a network node of the core network has admitted this request.

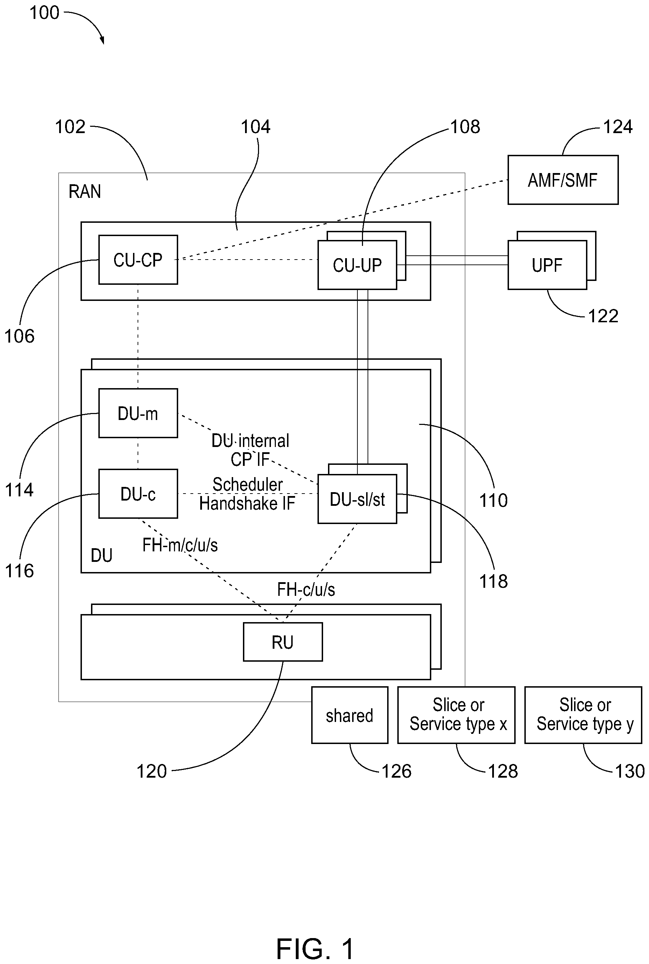

A disaggregated RAN architecture, as illustrated, for example, in FIG. 1, may include a decomposition of centralized unit user plane (CU-UP) functions into slice (sl) related functions or service types (st) related functions, whereby service type represents a group of different slices, and/or decomposition of DU functions into cell-related functions (DU-c), management-related functions (DU-m), and slice-related functions (DU-sl) or service type-related functions (DU-st).

FIG. 1 illustrates in an example implementation 100 in accordance with the present disclosure. The implementation 100 includes an example network 102 that includes a control plane 104 using a centralized unit control plane (CU-CP) 106 associated with and AMF/SMF 124 and CU-UP 108 to a UPF 122. FIG. 1 illustrates a device 110 including a DU-m 114 performing a DF internal CP IF with a DU-sl/st 118 and DU-c 116 performing scheduler handshake IF with the DU-sl/st 118. The DU-c and DU-sl/st are connected with FH-c/u/s to RU 120. As shown in FIG. 1 there is shared, slice 126 or service type x 128, and slice or service type y 130.

In such a disaggregated RAN architecture, when a UE wants to join the mobile network, a mechanism is needed to identify a suitable DU-sl/st function for this UE. In an example, after the LTE has gained access to the mobile network through Random Access Channel (RACH) Initial Access process (hereinafter, "RACH process" or "RACH procedure") offered by common cell-specific DU component DU-c, the UE processing may need to be handed over to the dedicated slice-specific DU component (DU-sl/st). The handover decision would be based on the slice preference of the UE.

In some network and connectivity implementations, such as, for example, 5G, the UE communicates its slice preference to a core network after, or in response to, completion of Radio Resource Control (RRC) connection setup of the RACH process. According to the example embodiments of the present disclosure, the UE may be configured to communicate its slice preferences during the early phase of the RACH process, thereby enabling an earlier UE context transfer from DU-c to the target DU-sl/st and causing the processing load of the DU-c, as well as, L3 end-to-end (E2E) call setup time to decrease.

With early knowledge of the slice preference requested by the UE, a proactive association of the UE context to a slice-specific DU component (i.e., DU-sl/st) may be established even before the core network has admitted this request. Of course, if, in the end, the core network does not permit the requested slice type, the UE will be released.

A network slice is a logically separated network service that allows fulfillment of certain service characteristics for a UE. Each network slice is uniquely identified by a S-NSSAI and the UE can request to join a set of up to eight (8) slice types summarized in a NSSAI list. The UE sends the slice request to the RAN in the RRC Setup Complete message (also referred to as "message 5" or "msg 5" or "msg5"). It can be noted that, while sending a wanted network slice information by the UE may be accomplished in an earlier message of a conventional network exchange, having such early knowledge of the LTE slice preference by the conventional network fails to prompt that conventional network into action. In particular, the conventional network fails to immediately provide the right user plane CPU resources in the right location and, thus, fails to realize setup time and resource savings provided by the apparatus and method of fast L3 call setup of the present disclosure.

Applying this approach to the disaggregated RAN architecture may necessitate holding the UEs in the common cell part (DU-c) until UE Context Setup and the LTE context transfer are completed. This may increase processing load on resource-constrained DU-c, complicate performing UE context transfer in the later phase of RRC connection setup, and may prolong L3 connection setup time.

In a disaggregated RAN implementation, the focus is to offload resource-constrained local cloud locations (e.g., local or close in proximity to the Radio Unit (RU)), e.g., On-Prem cloud, by making use of abundant resource pools available at central cloud locations, e.g., FarEdge. Hence, generally, the processing of delay-sensitive traffic should be performed closer to the antenna, i.e., at local cloud location, while the processing of the delay-tolerant traffic may be performed at the central cloud location. This way, for a UE joining the delay-tolerant slice, the final Data Radio Bearer (DRB) resources are created in the central cloud location. Accordingly, due to the Media Access Control (MAC) multiplexing requirements, the Signaling Radio Bearer (SRB1) processing for that LTE should also be done in the same central cloud location. Hence, the SRB1 context, which has already been set up in the DU-c during the RACH procedure, has to be subsequently moved to the central cloud location. This results in extra effort in control signaling, in stopping and starting of instances, and, thus, causes delay in the L3 E2E call setup.

In some applications, the UE receives access to the RAN after a RACH process handshake (e.g., messages 1 through 4). Within the RACH procedure, in response to receiving the RRC Setup Request (also referred to as "message 3" or "msg 3" or "msg3") from the UE, RAN instantiates processing resources for both SRB0 and SRB1. Later on, when the UE sends RRC Setup Complete (message 5), RAN informs the network about the slice(s) that the UE wants to join. This slice information is included in the message 5 in the form of a NSSAI list. The NSSAI list is transferred via an F1 interface application protocol (F1AP) and next generation interface application protocol (NGAP) to the core network, which, in turn, determines the allowed slices in the cell and for the UE.

In 5G single cloud native network function (CNF) RAN all the processing is performed inside the DU including DU-c and DU-m functionality, which includes the L1, L2-LO, L2-HI, L2-PS, and the CP-RT processing entities. There are no slice-specific processing entities in the 5G single CNF RAN.

The disaggregated RAN architecture may generate slice-specific L1, L2-LO, L2-HI processing entities named DU-sl/st, at a local cloud (close to (or local to) the RU) and at central cloud location (farther away from (or remote from) the RU). When the conventionally defined, such as in 5G, procedures are followed in the disaggregated RAN architecture, a LTE may inform the core network about its preference of slices at the completion of the RRC setup. However, since the slice requirements are unknown during the RACH procedure, the UE context must first be set up at DU-c close to the RU and only once the slice information is available in the RAN (after the approval of the core network), the suitable DU-sl/st entity for the UE processing can be determined.

In some instances, higher pooling gains can be achieved by keeping the UE traffic processing in central cloud, i.e., the farther away from the RU is the UE processing, the more pooling gains in processing are achieved. Thus, if latency requirements for the slice allow it, it may be beneficial to transfer the UE context / UE processing from the common cell-specific DU (DU-c) component to the slice-specific DU (DU-sl/st) component at the central cloud. An earlier context transfer may decrease the processing load of the DU-c part and decrease the time needed for the L3 call setup.

In other cases, if latency requirements are strict, then UE context / UE processing may be transferred from the common cell-specific DU (DU-c) component to the slice-specific DU (DU-sl/st) component at the local cloud location close to the RU. Today, in 5G mobile networks, the UEs slice requirement is transferred in message 5 (RRC Setup Complete). In accordance with the example embodiments of the present disclosure, an apparatus and a method for transferring a slice specific Information Element (IE) in message 3 (RRC Setup Request) is presented.

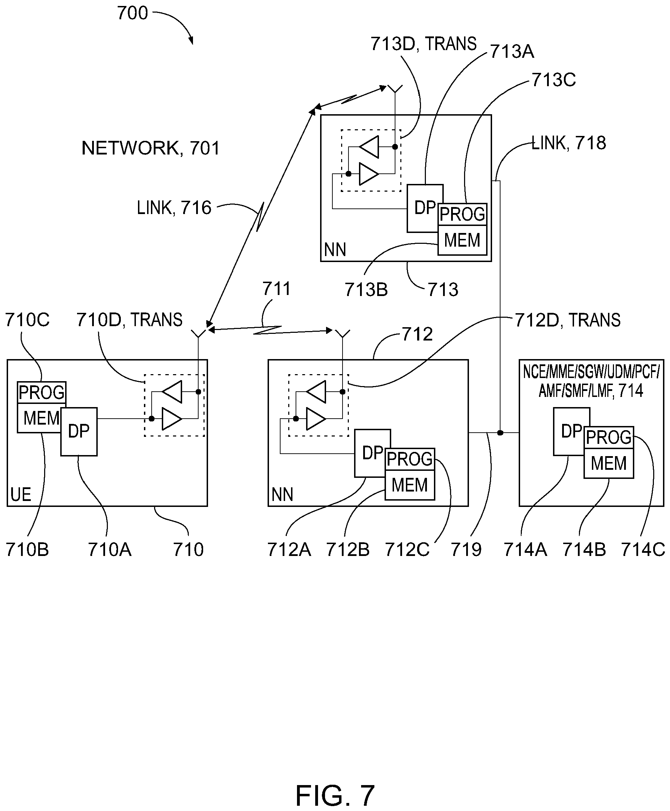

Before describing the example embodiments as disclosed herein in detail, reference is made to FIG. 7 for illustrating a simplified block diagram of various electronic devices that are suitable for use in practicing the example embodiments of this invention.

FIG. 7 shows a block diagram of one possible and non-limiting exemplary system 700 in which the example embodiments may be practiced. In FIG. 7, at least one of a plurality of devices or entities of the system 700 is in communication with one or more other devices or entities of the system 700 via a communication network 701. The network 701, as illustrated in FIG. 7, can comprise a wireless communication network, such as a mobile network as disclosed herein. Further, any reference herein to the network 701, as in FIG. 7, can be understood as a reference to any wired or wireless communication network as disclosed herein. A user equipment (UE) 710 of the system 700 can be a wireless and/or mobile device configured to access a network, such as the network 701. The UE 710, for example, may be a mobile phone (or called a "cellular" phone) and/or a computer with a mobile terminal function. For example, the UE or mobile terminal may also be a portable, pocket, handheld, computer-embedded or vehicle-mounted mobile device and performs a language signaling and/or data exchange with the RAN.

The UE 710 includes one or more processors DP 710A, one or more memories MEM 710B, and one or more transceivers TRANS 710D interconnected through one or more buses. Each of the one or more transceivers TRANS 710D includes a receiver and a transmitter. The one or more buses may be address, data, or control buses, and may include any interconnection mechanism, such as a series of lines on a motherboard or integrated circuit, fiber optics or other optical communication equipment, and the like. The one or more transceivers TRANS 710D which can be optionally connected to one or more antennas for communication to NN 712 and NN 713, respectively. The one or more memories MEM 710B include computer program code PROG 10C. The LTE 710 communicates with NN 712 and/or NN 713 via a wireless link 711 or 716.

The NN 712 (NR/5G/6G Node B, an evolved NB, or LTE device) is a network node such as a master or secondary node base station (e.g., for NR or LTE long term evolution) that communicates with devices such as NN 713 and LTE 710 of FIG. 7. The NN 712 provides access to devices such as the UE 710 to the network 701. The NN 712 includes one or more processors DP 712A, one or more memories MEM 712B, and one or more transceivers TRANS 712D interconnected through one or more buses. In accordance with the example embodiments these TRANS 712D can include X2 and/or Xn interfaces for use to perform the example embodiments. Each of the one or more transceivers TRANS 712D includes a receiver and a transmitter. The one or more transceivers TRANS 712D can be optionally connected to one or more antennas for communication over at least link 711 with the UE 710. The one or more memories MEM 712B and the computer program code PROG 712C are configured to cause, with the one or more processors DP 712A, the NN 712 to perform one or more of the operations as described herein.

The NN 712 may communicate with another gNB or eNB, such as the NN 713, and/or another device, such as the LTE 710, via, for example, link 711 or link 718. Further, despite the link 711 of FIG. 7 being illustrated as a wireless link and the link 718 of FIG. 7 being illustrated as a wired link, one of ordinary skill in the art would understand that the link 711, the link 718, and/or any other link of FIG. 7 may be wired or wireless or both and may implement, e.g., an X2 or Xn interface. Further, the link 711 and/or link 718 and/or any other communication link illustrated in FIG. 7 or implied by the accompanying description may be through other network devices such as, but not limited to an NCE/MME/SGW/UDM/PCF/AMF/SMF/LMF 714 device, that may include network control element (NCE) functionality, Mobility Management Entity (MME)/ Serving Gateway(SGW) functionality, and/or user data management (UDM) functionality, and/or Policy Control Function (PCF) functionality, and/or Access and Mobility Management Function (AMF) functionality, and/or Session Management Function (SMF) functionality, and/or Location Management Function (LMF), and/or Authentication Server (AUSF) functionality and which provides connectivity with a further network, such as a telephone network and/or a data communications network (e.g., the Internet), such as a User Plane Functionality, and/or an Access Management functionality for LTE and similar functionality for 5G or 6G.

The NN 713 can be for WiFi or Bluetooth or other wireless or wired device associated with a mobility function device, such as an AMF or SMF. Further, the NN 713 may comprise a NR/5G/6G Node B or an evolved NB or a base station, such as a master or secondary node base station (e.g., for NR or LTE long term evolution), that communicates with devices such as the NN 712 and/or UE 710 via the network 701. The NN 713 includes one or more processors DP 713A, one or more memories MEM 713B, one or more network interfaces, and one or more transceivers TRANS 713D interconnected through one or more buses. In accordance with the example embodiments these network interfaces of NN 713 can include X2 and/or Xn interfaces for use to perform the example embodiments. Each of the one or more transceivers TRANS 713D includes a receiver and a transmitter that can optionally be connected to one or more antennas. The one or more memories MEM 713B include computer program code PROG 713C. For instance, the one or more memories MEM 713B and the computer program code PROG 713C are configured to cause, with the one or more processors DP 713A, the NN 713 to perform one or more of the operations as described herein. The NN 713 may communicate with another mobility function device and/or eNB such as the NN 712 and the UE 710 or any other device using, e.g., link 711 or link 716 or link 718 or another link. These links maybe wired or wireless or both and may implement, e.g., an X2 or Xn interface. Further, as stated above the link 711 and/or link 716 and/or link 718 may be through other network devices such as, but not limited to, an NCE/MME/SGW device, such as the NCE/MME/SGW/UDM/PCF/AMF/SMF/LMF 714 of FIG. 7.

The one or more buses of the device of FIG. 7 may be address, data, or control buses, and may include any interconnection mechanism, such as a series of lines on a motherboard or integrated circuit, fiber optics or other optical communication equipment, wireless channels, and the like. For example, the one or more transceivers TRANS 712D, TRANS 713D, and/or TRANS 710D may be implemented as a remote radio head (RRH), with the other elements of the NN 712 being physically in a different location from the RRH, and these devices can include one or more buses that could be implemented in part as fiber optic cable to connect the other elements of the NN 712 to a RRH.

It is noted that although FIG. 7 shows a network node such as NN 712 and NN 713, any of these nodes may can incorporate or be incorporated into an eNodeB or eNB or gNB such as for LTE and NR, and would still be configurable to perform example embodiments. Also it is noted that description herein indicates that "cells" perform functions, but it should be clear that the gNB that forms the cell and/or a user equipment and/or mobility management function device that will perform the functions. In addition, the cell makes up part of a gNB, and there can be multiple cells per gNB.

The network 701, or any network it can represent, may or may not include a NCE/MME/SGW/UDM/PCF/AMF/SMF/LMF 714, which is configured to perform any 5G, 6G, and/or NR operations in addition to or instead of other standard operations at the time of this application. The NCE/MME/SGW/UDM/PCF/AMF/SMF/LMF 714 is configurable to perform operations in accordance with example embodiments in any of an LTE, NR, 5G, 6G, and/or any standards based communication technologies being performed or discussed at the time of this application. In addition, it is noted that the operations in accordance with example embodiments, as performed by the NN 712 and/or the NN 713, may also be performed at the NCE/MME/SGW/UDM/PCF/AMF/SMF/LMF 714.

The NCE/MME/SGW/UDM/PCF/AMF/SMF/LMF 714 includes one or more processors DP 714A, one or more memories MEM 714B, and one or more network interfaces (N/W I/F(s)), interconnected through one or more buses coupled with the link 716 and/or the link 718 and/or the link 719. In accordance with the example embodiments these network interfaces can include X2 and/or Xn interfaces for use to perform the example embodiments. The one or more memories MEM 714B include computer program code PROG 714C. The one or more memories MEM 714B and the computer program code PROG 714C are configured to, with the one or more processors DP 714A, cause the NCE/MME/SGW/UDM/PCF/AMF/SMF/LMF 714 to perform one or more operations which may be needed to support the operations in accordance with the example embodiments.

It is noted that that the NN 712 and/or NN 713 and/or UE 710 can be configured (e.g. based on standards implementations etc.) to perform functionality of a Location Management Function (LMF). The LMF functionality may be embodied in any of these network devices or other devices associated with these devices. In addition, an LMF such as the LMF of the MME/SGW/UDM/PCF/AMF/SMF/LMF 714 of FIG. 7, as at least described below, can be co-located with UE 710 such as to be separate from the NN 712 and/or the NN 713 of FIG. 7 for performing operations in accordance with example embodiments as disclosed herein.

The network 701 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as the one or more processors DP 710, DP 712A, DP 713A, and/or DP 714A and the memories MEM 710B, MEM 712B, MEM 713B, and/or MEM 714B, and also such virtualized entities create technical effects.

The computer readable memories MEM 712B, MEM 713B, and MEM 714B may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories MEM 710B, MEM 712B, MEM 713B, and MEM 714B may be means for performing storage functions. The one or more processors DP 710A, DP 712A, DP 713A, and DP 714A may be of any type suitable to the local technical environment, and may include one or more of general purpose computers, special purpose computers, microprocessors, digital signal processors (DSPs) and processors based on a multi-core processor architecture, as non-limiting examples. The one or more processors DP 710A, DP 712A, DP 713A, and DP 714A may be means for performing functions, such as controlling at least the UE 710, NN 712, NN 713, and other functions as described herein.

In general, various embodiments of any of these devices can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

In accordance with the example embodiments of the disclosure, an example apparatus is configured to transfer a slice specific Information Element (IE) in message 3 (RRC Setup Request). An early UE context transfer solution includes a mechanism to ensure an earlier instantiation of the processing resources and RAN functions needed to fulfil the UE's slice requirements, even if in the end the slice preference is not granted by the core network. This early UE context transfer is facilitated by signalling the required slices to the RAN in message 3 of the RACH process.

The IE in accordance with the present disclosure may include information directed to at least one of a single slice which the UE wants to join, or a set of slices which the UE wants to join, or an indication of the service latency, which could be a single bit indicating delay-sensitivity or delay-tolerance. By this method the intra-RAN communication message count may be shortened by around 20% and the L3 call setup time may also be reduced. Moreover resource bottlenecks inside the DU-c may be prevented.

The proposed approach includes preparing the RAN prior to the core network's decision to admit/reject LTE's access to the slice. And in case of the denial of the access to this slice this preparation in the RAN will be revised. The present disclosure provides a mechanism used by UE to inform RAN about the UE's slice preference or service delay sensitivity during RACH process. The present disclosure provides an IE (Information Element) configured to carry slice information or service delay-sensitivity information, wherein the IE, as provided herein, is included in message 3 of the RACH process. The present disclosure provides a mechanism for performing an early UE context transfer from DU-c to relevant DU-sl/st.

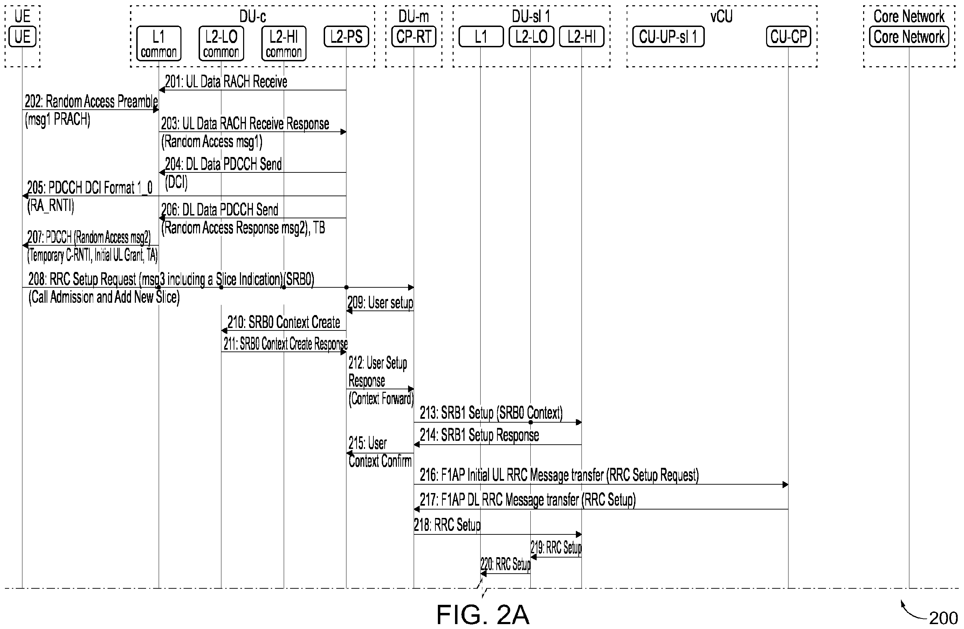

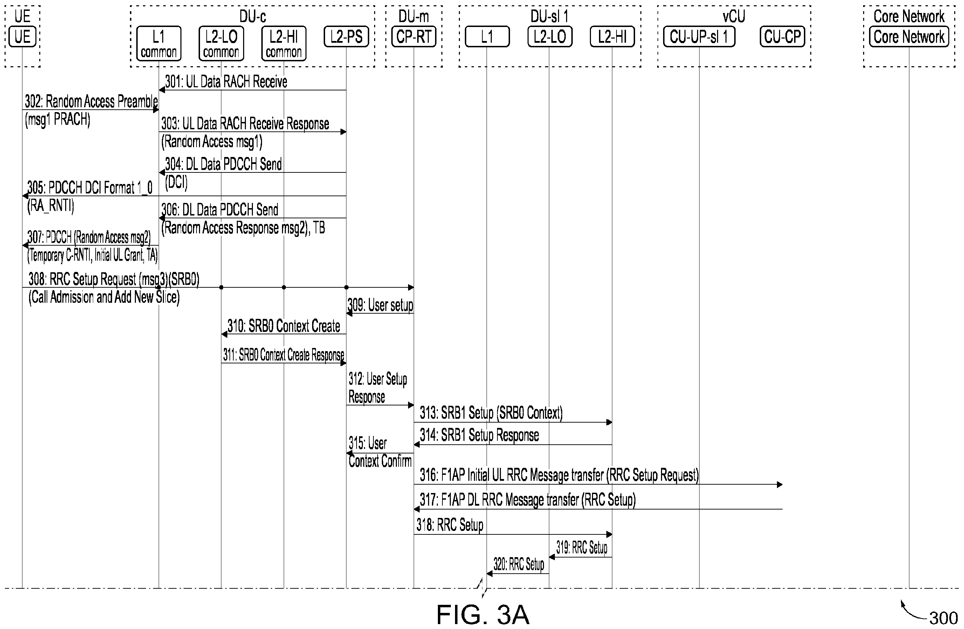

FIGS. 2A-2B and 3A-B illustrate example message flow diagrams for fast L3 call setup with DU-c, DU-m, and one DU-sl element and with early transfer of UE context to the DU-sl in accordance with the present disclosure. As illustrated in FIGS. 2A-2B and 3A-3B, RACH msg3 includes the desired slices and/or a single bit to indicate delay-sensitive or delay-tolerant service. After SRB0 creation in the DU-c, the SRB 1 can be set up immediately at the DU-sl 1 that performs the further processing of the UE for this slice. The management and control plane in the DU-m and the CU-CP are also informed early on about the location of the SRB1 processing. When the core network performs the NGAP Initial Context Setup procedure it can either accept the desired slice or reject it (FIG. 3A) with a NGAP UE Context Release Request. In case of rejection, all resources instantiated inside the DU-sl 1, DU-c and DU-m are released and the UE is informed about the rejection via RRC release, cf. FIG. 3A.

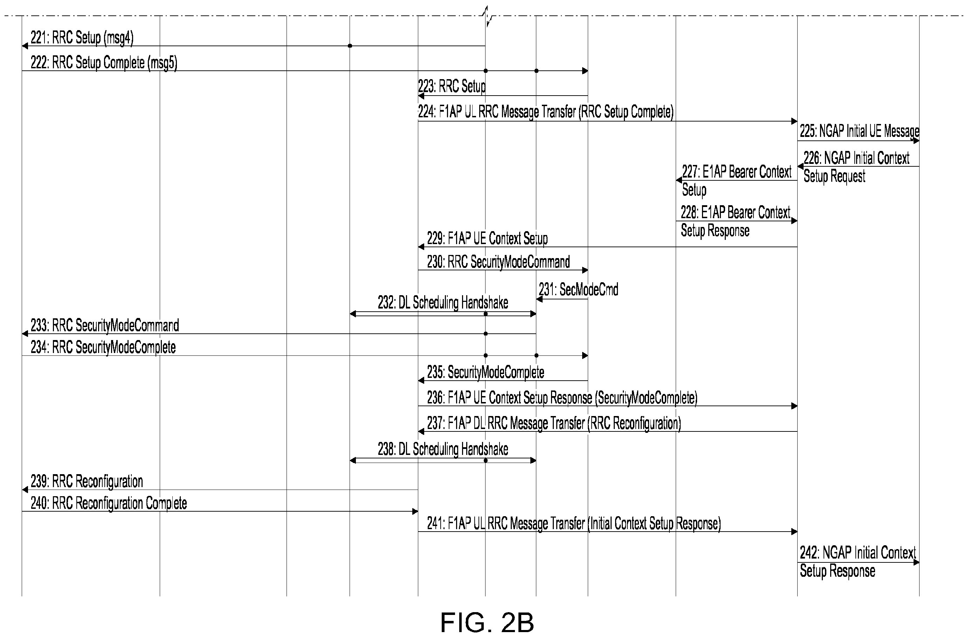

FIG. 2A and FIG. 2B show a fast L3 call setup, non-error case. FIGS. 2A-2B illustrate an example implementation 200 for a fast L3 call setup. FIGS. 2A-2B illustrate a fast L3 call setup with the DU-c, DU-m, and one DU-sl element with immediate mapping to the DU-sl 1. As illustrated in FIGS. 2A-2B, there is communication between a UE, such as the LTE 710, a DU-c, including L1 common, L2-LO common, L2-HI common, and L2-PS, a DU-m, including a CP-RT, a DU-sl 1, including a L1, L2-LO, and L2-HI, a vCU, including CU-UP-sl 1 and CU-CP, and a core network.

In step 201 of FIG. 2A, the L2-PS of the DU-c communicates an uplink (LTL) data RACH Receive to the L1 of the DU-c. As illustrated in step 202 of FIG. 2A, the L1 of the DU-c receives from the LTE a random access preamble (message 1 or "msg1" PRACH). As illustrated in step 203 of FIG. 2A, the L1 of the DU-c communicates a UL data RACH receive response to the L2-PS of the DU-c. As illustrated in step 204 of FIG. 2A, the L2-PS of the DU-c communicates a downlink (DL) data physical DL control channel (PDCCH) send to the L1 of the DU-c. As illustrated in step 205 of FIG. 2A, the L2-PS of the DU-c communicates PDCCH format 1_0 (RA_RNTI) to the UE. As illustrated in step 206 of FIG. 2A, the L2-PS of the DU-c communicates a DL data physical DL shared channel (PDSCH) send to the L1 of the DU-c. As illustrated in step 207 of FIG. 2A, the L1 of the DU-c communicates PDSCH (random access msg2) (temporary C-RNTI, initial UL grant, and TA) to the UE.

Step 208 of FIG. 2A illustrates that in accordance with the example embodiments of the disclosure, the UE communicates RRC setup request (msg3 including a slice indication) (SRBO) (Call admission and Add New Slice) to the CP-RT of the DU-m. As illustrated in step 209 of FIG. 2A, the CP-RT of the DU-m communicates a user setup to the L2-PS of the DU-c. As illustrated in step 210 of FIG. 2A, the L2-PS of the DU-c communicates an SRB0 Context Create to the L2-LO of the DU-c. As illustrated in step 211 of FIG. 2A, the L2-PS of the DU-c communicates an SRB0 Context Create Response to the L2-LO of the DU-c. As illustrated in step 212 of FIG. 2A, the L2-PS of the DU-c communicates a User Setup Response (Context Forward) to the CP-RT of the DU-m.

Step 213 of FIG. 2A illustrates that, in accordance with the example embodiments of the disclosure, the CP-RT of the DU-m communicates SRB1 setup (SRBO context) to the L2-HI of the DU-sl 1. As illustrated in step 214 of FIG. 2A, in accordance with the example embodiments of the disclosure, the L2-HI of the DU-sl 1 communicates an SRB setup response to the CP-RT of the DU-m.

As illustrated in step 215 of FIG. 2A, the CP-RT of the DU-m communicates a user context confirm to the L2-PS of the DU-c. As illustrated in step 216 of FIG. 2A, the CP-RT of the DU-m communicates F1AP an initial UL RRC message transfer (RRC setup request) to the CU-CP of the vCU. As illustrated in step 217 of FIG. 2A, the CU-CP of the vCU F1AP communicates an F1AP DL RRC message transfer (RRC setup) to the CP-RT of the DU-m. As illustrated in step 218 of FIG. 2A, the CP-RT of the DU-m communicates an RRC setup to L2-HI of the DU-sl 1. As illustrated in step 219 of FIG. 2A, the L2-HI of the DU-sl 1 communicates an RRC setup to the L2-LO of the DU-sl 1. As illustrated in step 220 of FIG. 2A, the L2-LO of the DU-sl 1 communicates an RRC setup to the L1 of the DU-sl 1.

FIG. 2B illustrates further example implementations 200-A for a fast L3 call setup an example implementation 200-A for a fast L3 call setup. FIG. 2B illustrates a fast L3 call setup with DU-c, DU-m, and one DU-sl element with immediate mapping to the DU-sl 1. As illustrated in FIG. 2B, there is communication between a UE, such as the LTE 710, a DU-c, including L1 common, L2-LO common, L2-HI common, and L2-PS, a DU-m, including a CP-RT, a DU-sl 1, including a L1, L2-LO, and L2-HI, a vCU, including CU-UP-sl 1 and CU-CP, and a core network.

As illustrated in step 221 of FIG. 2B, the L1 of the DU-sl 1 communicates RRC setup (msg4) to the UE. As illustrated in step 222 of FIG. 2B, the UE communicates RRC setup complete (msg 5) to the L2-HI of the DU-sl 1. As illustrated in step 223 of FIG. 2B, the L2-HI of the DU-sl 1 communicates an RRC setup to the CP-RT of the DU-m. As illustrated in step 224 of FIG. 2B, the CP-RT of the DU-m communicates F1AP UL RRC message transfer (RRC setup complete) to the CU-CP of the vCU.

As illustrated in step 225 of FIG. 2B, CU-CP of the vCU communicates an NGAP initial UE message to the core network. As illustrated in step 226, the core network communicates an NGAP initial context setup request to CU-CP of the vCU. As illustrated in step 227 of FIG. 2B, the CU-CP of the vCU communicates an E1AP bearer context setup to the CU-UP-sl 1 of the vCU. As illustrated in step 228 of FIG. 2B, the CU-UP-sl 1 of the vCU communicates E1AP bearer context setup response to the CU-CP of the vCU. As illustrated in step 229 of FIG. 2B, the CU-CP of the vCU communicates an F1AP UE context setup to the CP-RT of the DU-m.

As illustrated in step 230 of FIG. 2B, the CP-RT of the DU-m communicates an RRC security mode command to the L2-HI of the DU-sl 1. As illustrated in step 231 of FIG. 2B, the L2-HI of the DU-sl 1 communicates a security mode command (SecMode Cmd) to the L2-LO of the DU-sl 1. As illustrated in step 232 of FIG. 2B, the L2-PS of the DU-c performs DL scheduling handshake with the L2-LO of the DU-sl 1 and the L1 of the DU-sl 1. As illustrated in step 233 of FIG. 2B, the L2-LO of the DU-sl 1 communicates an RRC security mode command to the UE. As illustrated in step 234 of FIG. 2B, the UE communicates an RRC security mode complete to the L2-HI of the DU-sl 1. As illustrated in step 235 of FIG. 2B, the L2-HI of the DU-sl 1 communicates a security mode complete to the CP-RT of the DU-m. As illustrated in step 236 of FIG. 2B, the CP-RT of the DU-m communicates F1AP UE context setup response (security mode complete) to the CU-CP of the vCU. As illustrated in step 237 of FIG. 2B, the CU-CP of the vCU communicates an F1AP DL RRC message transfer (RRC reconfiguration) to the CP-RT of the DU-m. As illustrated in step 238 of FIG. 2B, the L2-PS of the DU-c performs a DL scheduling handshake with the L2-LO of the DU-sl 1 and the L1 of the DU-sl 1.

As illustrated in step 239 of FIG. 2B, the CP-RT of the DU-m communicates a RRC reconfiguration to the LTE. As illustrated in step 240 of FIG. 2B, the UE communicates RRC reconfiguration complete to the CP-RT of the DU-m. As illustrated in step 241 of FIG. 2B, the CP-RT of the DU-m communicates an F1AP UL RRC message transfer (initial context setup response) to the CU-CP of the vCU. As illustrated in step 242 of FIG. 2B, the CU-CP of the vCU communicates an NGAP initial context setup response to the core network.

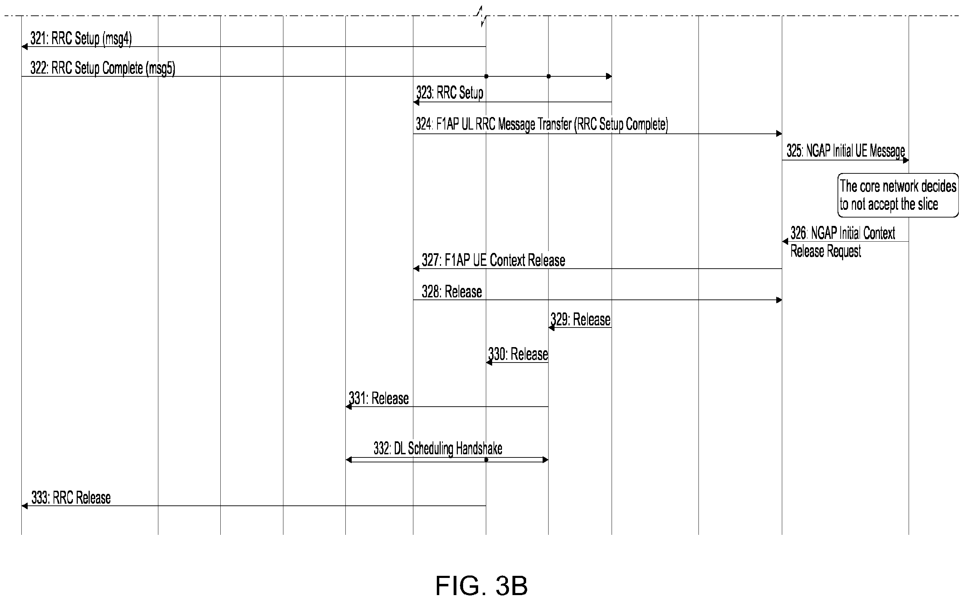

FIG. 3A and FIG. 3B illustrate a fast L3 call setup. FIGS. 3A-3B illustrate an example implementation 300 of a failure case during a fast L3 call setup. FIGS. 3A-3B illustrate a fast L3 call setup with DU-c, DU-m, and one DU-sl element with immediate mapping to the DU-sl. As illustrated in FIG. 3A and FIG. 3B, there is communication between a UE; a DU-c including an L1, L2-LO, L2-HI, and L2-PS; a DU-m including a CP-RT; a DU-sl including an L1, L2-LO, and L2-HI; a vCU including CU-UP-sl and CU-CP; and a core network.

In step 301 of FIG. 3A, the L2-PS of the DU-c communicates a UL data RACH Receive to the L1 of the DU-c. As illustrated in step 302 of FIG. 3A, the L1 of the DU-c receives a random access preamble (msg1 PRACH) from the UE. As illustrated in step 303 of FIG. 3A, the L1 of the DU-c communicates a UL data RACH receive response to the L2-PS of the DU-c. As illustrated in step 304 of FIG. 3A, the L2-PS of the DU-c communicates a DL data PDCCH send to the L1 of the DU-c. As illustrated in step 305 of FIG. 3A, the L2-PS of the DU-c communicates a PDCCH format 1_0 (RA_RNTI) to the UE. As illustrated in step 306 of FIG. 3A, the L2-PS of the DU-c communicates a DL data PDSCH send (Random Access Response msg 2, TB) to the L1 of the DU-c. As illustrated in step 307 of FIG. 3A, the L1 of the DU-c communicates a PDSCH (random access msg2) (temporary C-RNTI, initial LTL grant, and TA) to the UE.

Step 308 of FIG. 3A illustrates that, in accordance with the example embodiments of the disclosure, the UE communicates an RRC setup request (msg3) (SRBO) (Call admission and add new slice) to the CP-RT of the DU-m. In accordance with example embodiments of the disclosure, the communication of step 308 includes any of the elements in the DU-c, e.g., L1, L2-LO, L2-HI, and L2-PS, through appropriate scheduling. As illustrated in step 309 of FIG. 3A, the CP-RT of the DU-m communicates a user setup to L2-PS. As illustrated in step 310 of FIG. 3A, the L2-PS communicates an SRB0 context create to the L2-LO of the DU-c. As illustrated in step 311 of FIG. 3A, the L2-PS of the DU-c receives an SRB0 context create response from the L2-LO of the DU-c. As illustrated in step 312 of FIG. 3A, the L2-PS communicates a user setup response (context forward) to the CP-RT of the DU-m.

Step 313 of FIG. 3A illustrates that, in accordance with the example embodiments of the disclosure, the CP-RT of the DU-m and the L2-HI of the DU-sl. In accordance with example embodiments of the disclosure, the L2-LO in the DU-sl may be involved in the forwarding operation of step 313. As illustrated in step 314 of FIG. 3A, in accordance with the example embodiments of the disclosure, the L2-HI of the DU-sl communicates an SRB setup response to the CP-RT of the DU-m.

As illustrated in step 315 of FIG. 3A, the CP-RT of the DU-m communicates a user context confirm to the L2-PS of the DU-c. As illustrated in step 316 of FIG. 3A, the CP-RT of the DU-m communicates an F1AP initial UL RRC message transfer (RRC setup request) to the CU-CP of the vCU. As illustrated in step 317 of FIG. 3A, the CU-CP of the vCU communicates an F1AP DL RRC message transfer (RRC setup) to the CP-RT of the DU-m. As illustrated in step 318 of FIG. 3A, the CP-RT of the DU-m communicates an RRC setup to L2-HI of the DU-sl. As illustrated in step 319 of FIG. 3A, the L2-HI of the UD-sl communicates an RRC setup to the L2-LO of the DU-sl. As illustrated in step 319 of FIG. 3A, the L2-HI of the DU-sl communicates an RRC setup to the L2-LO of the DU-sl. Then as illustrated in step 320 of FIG. 3A, the L2-LO of the DU-sl communicates an RRC setup to the L1 of the DU-sl.

FIG. 3B illustrates further embodiments of FIG. 3A and an example implementation 300 of a failure case during a fast L3 call setup. As illustrated in step 321 of FIG. 3B, the L1 of the DU-sl communicates an RRC setup (msg4) to the UE. As illustrated in step 322 of FIG. 3B, the UE communicates an RRC setup complete (msg 5) to the L2-HI of the DU-sl. As illustrated in step 323 of FIG. 3B, the L2-HI of the DU-sl communicates an RRC setup to the CP-RT of the DU-m. As illustrated in step 324 of FIG. 3B, the CP-RT of the DU-m communicates an F1AP UL RRC message transfer (RRC setup complete) to the CU-CP of the vCU. As illustrated in step 325 of FIG. 3B, the CU-CP of the vCU communicates an NGAP initial UE message to the core network. In accordance with example embodiments of the disclosure, the core network may be configured to decide not to accept the slice.

As illustrated in step 326 of FIG. 3B, the core network communicates an NGAP UE context release request to the CU-CP of the vCU. As illustrated in step 327 of FIG. 3B, the CU-CP of the vCU communicates F1AP UE context release to the CP-RT of the DU-m. As illustrated in step 328 of FIG. 3B, the CP-RT of the DU-m communicates a release to the L2-HI of the DU-sl. As illustrated in step 329 of FIG. 3B, the L2-HI of the DU-sl communicates a release to the L2-LO of the DU-sl. As illustrated in step 330 of FIG. 3B, the L2-LO of the DU-sl communicates a release to the L1 of the DU-sl. As illustrated in step 331 of FIG. 3B, the L2-LO of the DU-sl communicates a release to the L2-PS of the DU-c. As illustrated in step 332 of FIG. 3B, the L2-PS of the DU-c performs a scheduling handshake with the L2-LO of the DU-sl and the L1 of the DU-sl. As illustrated in step 333 of FIG. 3B, the L1 of the DU-sl communicates an RRC release to the UE.

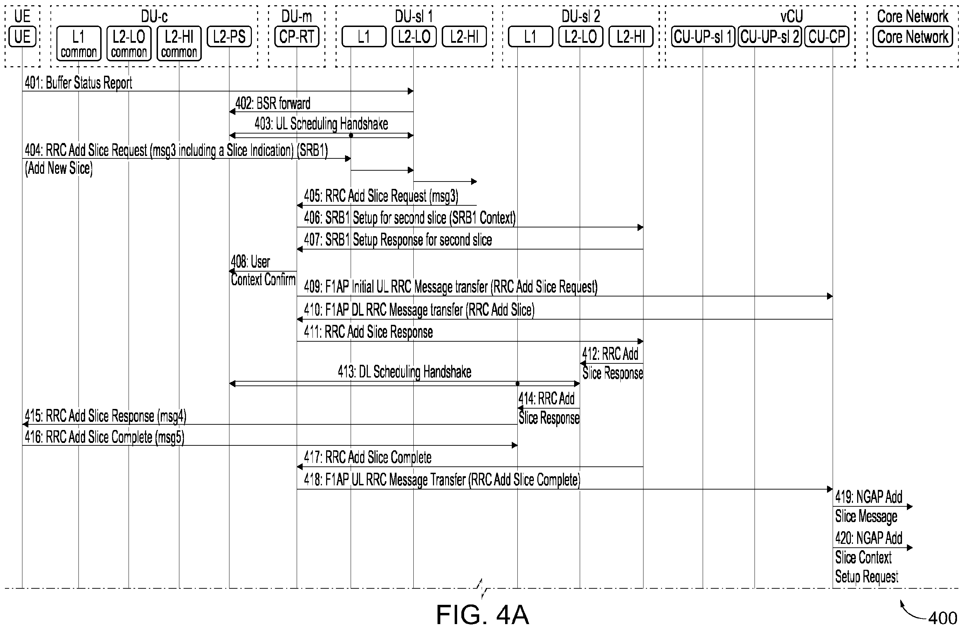

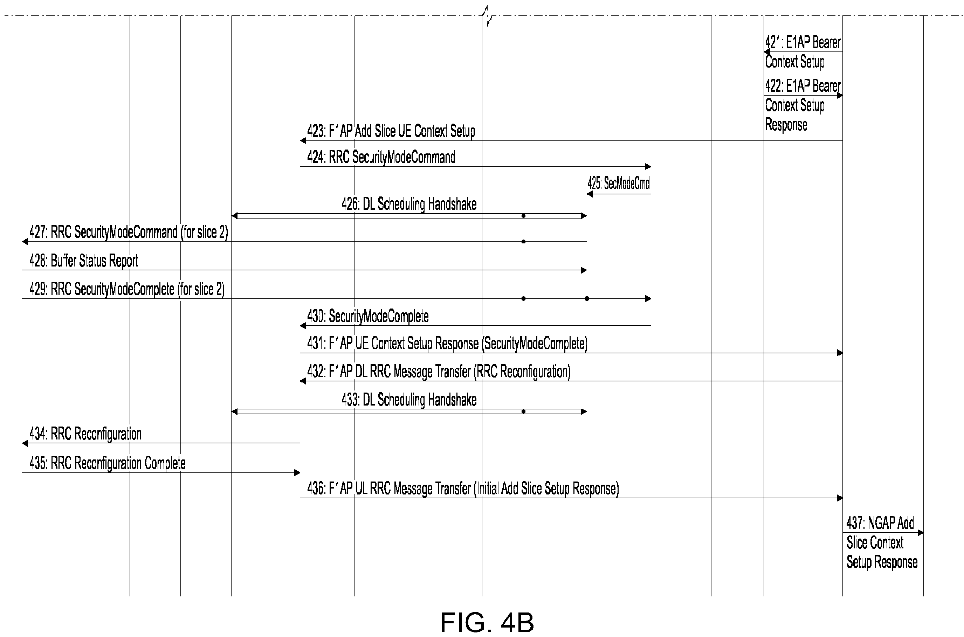

FIG. 4A and FIG. 4B illustrate a second slice setup. FIG. 4A and FIG. 4B illustrate an example implementation 400 of a non-error second slice setup. FIG. 4A and FIG. 4B illustrate an add second slice in fast L3 call setup with DU-c, DU-m, and add slice request for DU-sl 2 via DU-sl 1. As illustrated in FIG. 4A and FIG. 4B, there is communication between a UE; a DU-c including L1, L2-LO, L2-HI, and L2-PS; a DU-m including a CP-RT; a DU-sl 1 including a L1, L2-LO, and L2-HI; a DU-sl 2 including a L1, L2-LO, and L2-HI; a vCU including CU-UP-sl 1, CU-UP-sl 2, and CU-CP and a core network.

As illustrated in step 401 of FIG. 4A, the UE communicates a buffer status report to the L2-LO of the DU-sl 1. As illustrated in step 402 of FIG. 4A, the L2-LO of the DU-sl 1 communicates a buffer status report (BSR) forward to the L2-PS of the DU-c. As illustrated in step 403 of FIG. 4A, the L2-PS of the DU-c performs a LTL scheduling handshake with the L2-LO of the DU-sl 1 and the L1 of the DU-sl 1.

Step 404 of FIG. 4A illustrates communication, in accordance with example embodiments of the disclosure, of an RRC add slice request (msg 3) (including a slice indication) (SRB1) (add new slice) from the UE to the L1 of the DU-sl 1. This message is further communicated from L1 of the DU-sl 1 to the L2-LO of the DU-sl 1 and, subsequently, from the L2-LO of the DU-sl 1 and the L2-HI of the DU-sl 1. Step 405 of FIG. 4A illustrates communication in accordance with example embodiments of the disclosure, where the L2-HI of the DU-sl 1 communicates an RRC add slice request (msg 3) to the CP-RT of the DU-m. Step 406 of FIG. 4A illustrates communication of SRB1 setup for second slice (SRB1 context) from the CP-RT of the DU-m to the L2-HI of the DU-sl 2. As illustrated in step 407 of FIG. 4A, the L2-HI of the DU-sl 2 communicates an SRB1 setup for second slice (SRB1 context) to the CP-RT of the DU-m. As illustrated in step 408 of FIG. 4A, the CP-RT of the DU-m communicates a user context confirm to the L2-PS of the DU-c.

Step 409 of FIG. 4A illustrates communication in accordance with example embodiments of the disclosure, where the CP-RT of the DU-m communicates an F1AP initial UL RRC message transfer (RRC add slice request) to the CU-CP of the vCU. Step 410 of FIG. 4A illustrates communication in accordance with example embodiments of the disclosure, where the CU-CP of the vCU communicates an F1AP DL RRC message transfer (RRC add slice) to the CP-RT of the DU-m.

As illustrated in step 411 of FIG. 4A, the CP-RT of the DU-m communicates an RRC add slice response to the L2-HI of the DU-sl 2. As illustrated in step 412 of FIG. 4A, the L2-HI of the DU-sl 2 communicates an RRC add slice response to the L2-LO of the DU-sl 2. As illustrated in step 413 of FIG. 4A, the L2-PS of the DU-c performs a DL scheduling handshake with the L2-LO of the DU-sl 2 and the L1 of the DU-sl 2. As illustrated in step 414 of FIG. 4A, the L2-LO of the DU-sl 2 communicates an RRC add slice response to the L1 of the DU-sl 2.

Step 415 of FIG. 4A illustrates communication in accordance with example embodiments of the disclosure, where the L1 of the DU-sl 2 communicates an RRC add slice response (msg4) to the UE. Step 416 of FIG. 4A illustrates communication in accordance with example embodiments of the disclosure, where the UE communicates an RRC add slice complete (msg5) to the L2-HI of the DU-sl 2. In accordance with example embodiments of the disclosure, the communication of step 416 can include elements in the DU-sl 2, e.g., L1 and/or L2-LO, through appropriate scheduling. As illustrated in step 417 of FIG. 4A, the L2-HI of the DU-sl 2 communicates an RRC add slice completion to the CP-RT of the DU-m. As illustrated in step 418 of FIG. 4A, the CP-RT of the DU-m communicates an F1AP UL RRC message transfer (RRC add slice complete) to the CU-CP of the vCU.

Step 419 of FIG. 4A illustrates communication in accordance with example embodiments of the disclosure, where the CU-CP of the vCU communicates an NGAP add slice message to the core network. Step 420 of FIG. 4A illustrates communication in accordance with example embodiments of the disclosure, where the core network communicates an NGAP add slice context setup request message to the CU-CP of the vCU.

FIG. 4B illustrates further embodiments of FIG. 4A. As illustrated in step 421 of FIG. 4B, the CU-CP of the vCU communicates a E1AP bearer context setup to the CU-UP-sl 2 of the vCU. As illustrated in step 422 of FIG. 4B, the CU-UP-sl 2 of the vCU communicates an E1AP bearer context setup response to the CU-CP of the vCU. Step 423 of FIG. 4B illustrates communication in accordance with example embodiments of the disclosure, where the CU-CP of the vCU communicates an F1AP add slice LTE context setup to the CP-RT of the DU-m. As illustrated in step 424 of FIG. 4B, the CP-RT of the DU-m communicates an RRC security mode command to the L2-HI of the DU-sl 2. As illustrated in step 425 of FIG. 4B, the L2-HI of the DU-sl 2 communicates a security mode command (SecModeCmd) to the L2-LO of the DU-sl 2. As illustrated in step 426 of FIG. 4B, the L2-PS of the DU-c performs a DL scheduling handshake with the L2-LO of the DU-sl 2 and the L1 of the DU-sl 2.

Step 427 of FIG. 4B illustrates communication in accordance with example embodiments of the disclosure, where the L2-LO of the DU-sl 2 communicates a RRC security mode command (for slice 2) to the UE. In accordance with example embodiments of the disclosure this communication can include elements in the DU-sl 2, e.g., L1, such as through scheduling. As illustrated in step 428 of FIG. 4B, the UE communicates a buffer status report to the L2-LO of the DU-sl 2. Step 429 of FIG. 4B illustrates communication in accordance with example embodiments of the disclosure, where the UE communicates a RRC security mode complete (for slice 2) to the L2-HI of the DU-sl 2. In accordance with example embodiments of the disclosure the communication of step 429 as in FIG. 4B can include elements in the DU-sl 2, e.g., L1 and/or L2-LO, such as through appropriate scheduling.

As illustrated in step 430 of FIG. 4B, the L2-HI of the DU-sl 2 communicates a security mode complete message (securitymodecomplete) to the CP-RT of the DU-m. As illustrated in step 431 of FIG. 4B, the CP-RT of the DU-m communicates an F1AP UE context setup response (securitynmodecomplete) to the CU-CP of the vCU. As illustrated in step 432 of FIG. 4B, the CU-CP of the vCU communicates F1AP DL RRC messaged transfer (RRC reconfiguration) to the CP-RT of the DU-m. As illustrated in step 433 of FIG. 4B, the L2-PS of the DU-c performs a DL scheduling handshake with the L2-LO of the DU-sl 2 . In accordance with example embodiments of the disclosure the communication of step 433 can include elements in the DU-sl 2, e.g., L1, such as through appropriate scheduling.

As illustrated in step 434 of FIG. 4B, the CP-RT of the DU-m communicates an RRC reconfiguration to the UE. As illustrated in step 435 of FIG. 4, the UE communicates an RRC reconfiguration complete to the CP-RT of the DU-m. Step 436 of FIG. 4B illustrates communication in accordance with example embodiments of the disclosure, where the CP-RT of the DU-m communicates an F1AP UL RRC message transfer (initial add slice setup response) to the CU-CP of the vCU. Step 437 of FIG. 4B illustrates communication in accordance with example embodiments of the disclosure, where the CU-CP of the vCU communicates an NGAP add slice context setup response to the core network.

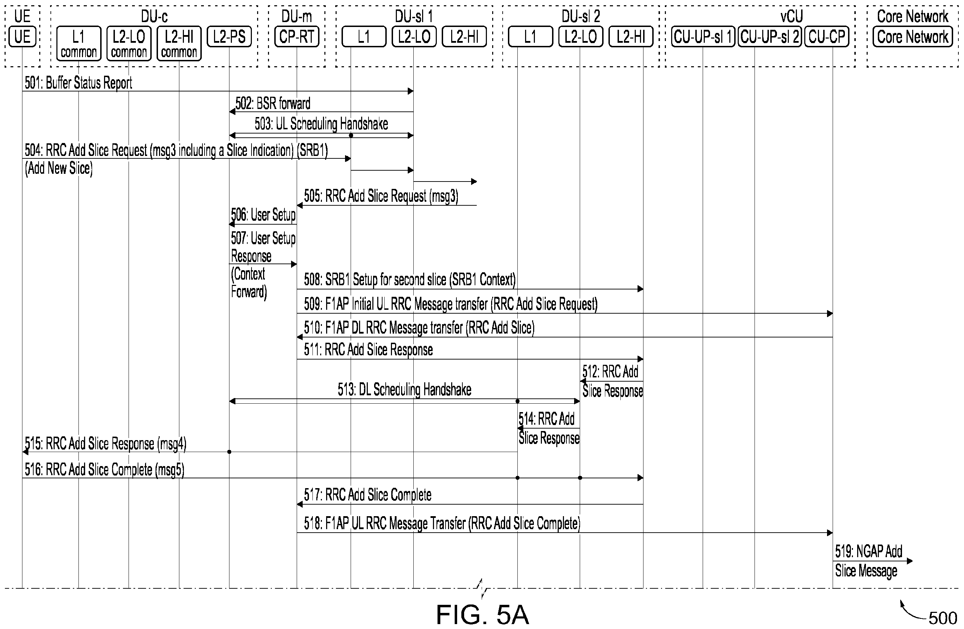

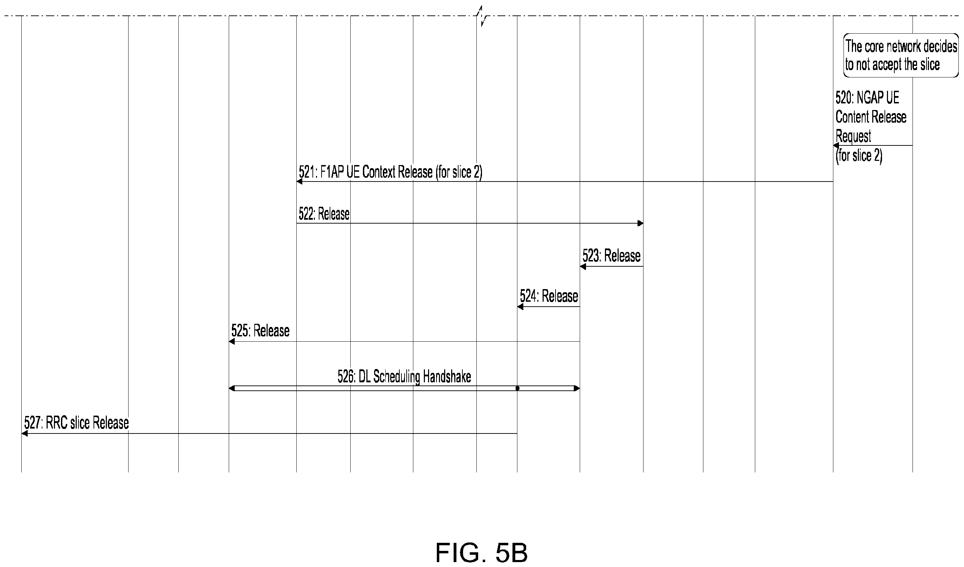

FIG. 5A and FIG. 5B illustrate a second slice setup. FIG. 5A illustrates an example implementation 500 of a second slice setup in accordance with the present disclosure. As illustrated in FIG. 5A, there is communication between a UE; a DU-c including L1, L2-LO, L2-HI, and L2-PS; a DU-m including a CP-RT; a DU-sl 1 including a L1, L2-LO, and L2-HI; a DU-sl 2 including a L1, L2-LO, and L2-HI; a vCU including CU-UP-sl 1, CU-UP-sl 2, and CU-CP and a core network.

As illustrated in step 501 of FIG. 5A, the UE communicates a buffer status report to the L2-LO of the DU-sl 1. As illustrated in step 502 of FIG. 5A, the L2-LO of the DU-sl 1 communicates a BSR forward to the L2-PS of the DU-c. As illustrated in step 503 of FIG. 5A, the L2-PS of the DU-c performs a UL scheduling handshake with the L2-LO of the DU-sl 1. In accordance with example embodiments of the disclosure the communication of step 503 can include elements in the DU-sl 1, e.g., L1, such as through appropriate scheduling.

Step 504 of FIG. 5A illustrates communication in accordance with example embodiments of the disclosure, where the UE communicates an RRC add slice request (msg 3) (including a slice indication) (SRB1) (add new slice) to the L1 of the DU-sl 1. This message is further communicated between the L2-LO and the L2-HI of the DU-sl 1. Step 505 of FIG. 5A illustrates communication in accordance with example embodiments of the disclosure, where the L2-HI of the DU-sl 1 communicates an RRC add slice request (msg3) to the CP-RT of the DU-m.

As illustrated in step 506 of FIG. 5A, the CP-RT of the DU-m communicates a user setup to the L2-PS of the DU-c. As illustrated in step 507 of FIG. 5A, the L2-PS of the DU-c communicates a user setup response (context forward) to the CP-RT of the DU-m. As illustrated in step 508 of FIG. 5A, the CP-RT of the DU-m communicates SRB1 setup for second slice (SRB1 context) to the L2-HI of the DU-sl 2. Step 509 of FIG. 5A illustrates communication in accordance with example embodiments of the disclosure, where the CP-RT of the DU-m communicates an F1AP initial UL RRC message transfer (RRC add slice request) to the CU-CP of the vCU. Step 510 of FIG. 5A illustrates communication in accordance with example embodiments of the disclosure, where the CU-CP of the vCU communicates an F1AP DL RRC message transfer (RRC add slice) to the CP-RT of the DU-m.

As illustrated in step 511 of FIG. 5A, the CP-RT of the DU-m communicates an RRC add slice response to the L2-HI of the DU-sl 2. As illustrated in step 512 of FIG. 5A, the L2-HI communicates an RRC add slice response to the L2-LO of the DU-sl 2. As illustrated in step 513 of FIG. 5A, the L2-PS of the DU-c performs a DL scheduling handshake with the L2-LO of the DU-sl 2. In accordance with example embodiments of the disclosure the handshake of step 513 can include elements in the DU-sl 2, e.g., L1, such as through appropriate scheduling. As illustrated in step 514 of FIG. 5A, the L2-LO communicates an RRC add slice response to the L1 of the DU-sl 2.

Step 515 of FIG. 5A illustrates communication in accordance with example embodiments of the disclosure, the L1 of the DU-sl 2 communicates an RRC add slice response (msg4) to the UE. In accordance with example embodiments of the disclosure this add slice response can include one or more elements of the DU-c, e.g., L2-PS. Step 516 of FIG. 5A illustrates communication in accordance with example embodiments of the disclosure, where the UE communicates an RRC add slice complete (msg5) to the L2-HI of the DU-sl 2.

As illustrated in step 517 of FIG. 5A, the L2-HI of the DU-sl 2 communicates an RRC add slice complete message to the CP-RT of the DU-m. As illustrated in step 518 of FIG. 5A, the CP-RT of the DU-m communicates an F1AP UL RRC message transfer (RRC add slice complete) to the CP-CU of vCU. Step 519 of FIG. 5A illustrates communication in accordance with example embodiments of the disclosure, where the CU-CP of the vCU communicates an NGAP add slice message to the core network.

FIG. 5B illustrates further embodiments of FIG. 5A. Step 520 of FIG. 5B illustrates communication in accordance with example embodiments of the disclosure, the core network communicates an NGAP context release request (for slice 2) to the CU-CP of the vCU. Step 521 of FIG. 5B illustrates communication in accordance with example embodiments of the disclosure, where the CU-CP of the vCU communicates an F1AP UE context request (for slice 2) to the CP-RT of the DU-m.

As illustrated in step 522 of FIG. 5B, the CP-RT of the DU-m communicates a release to the L2-HI of the DU-sl 2. As illustrated in step 523 of FIG. 5, the L2-HI communicates a release to the L1 of the DU-sl 2. As illustrated in step 524 of FIG. 5B, the L2-LO communicates a release to the L1 of the DU-sl 2. As illustrated in step 525 of FIG. 5B, the L2-LO of the DU-sl 2 communicates a release to the L2-PS of the DU-c. As illustrated in step 526 of FIG. 5, the L2-LO performs a DL scheduling handshake with the L2-LO of the DU-sl 2 and the L1 of the DU-sl 2. Step 527 of FIG. 5B illustrates communication in accordance with example embodiments of the disclosure, where the L1 of the DU-sl 2 communicates an RRC slice release to the UE.

FIGS. 4 and 5 illustrate adding the UE to second slice in fast L3 call setup with `add slice request' for DU-sl 2 via DU-sl 1. RACH msg3 has a new "RRC Add slice request" and includes the desired slices and/or a single bit of data to indicate delay-sensitive or delay-tolerant service. As the SRB0 created in the DU-c is still running, the SRB1 can be set up immediately on the second DU-sl 2. The message 4 is the new RRC Add Slice Response, which is fully processed on DU-sl 2 (L2-HI, L2-LO, L1). The same is true for message 5, the new RRC Add Slice Response Complete. The control plane in the CU-CP is also informed early on about the location of the SRB1 processing for the second slice. The core network gets the Add New Slice message and either accepts the desired slice in a new Add Slice Context Setup request (FIG. 4A and FIG. 4B) or rejects it with a NGAP UE Context Release Request (FIG. 5A). In case of rejection all created resources inside the CU-CP, the DU-sl 2, and the DU-m are released and in the end the LTE is informed about this rejection via RRC release, cf. FIG. 5A and FIG. 5B.

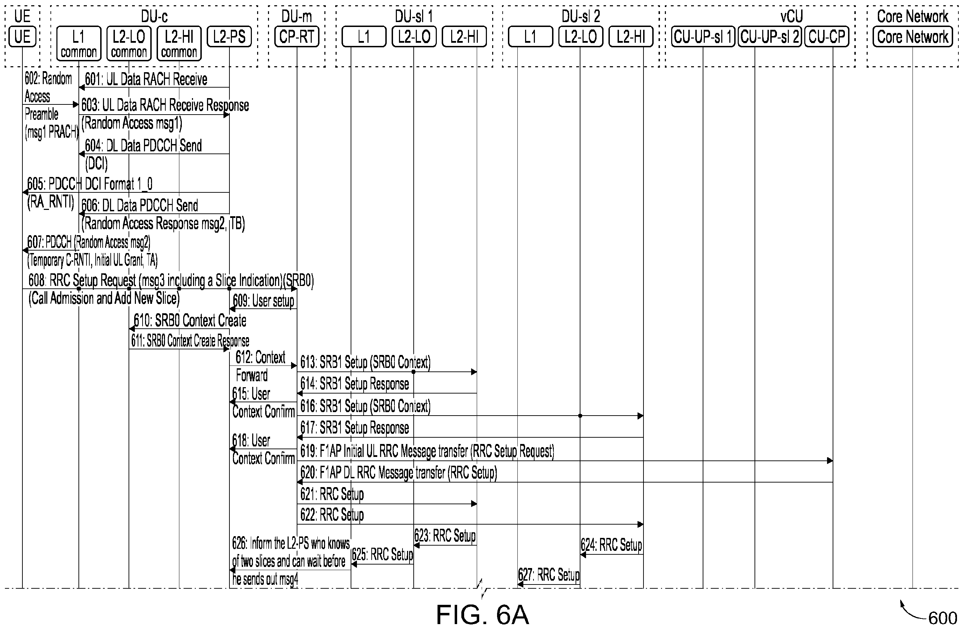

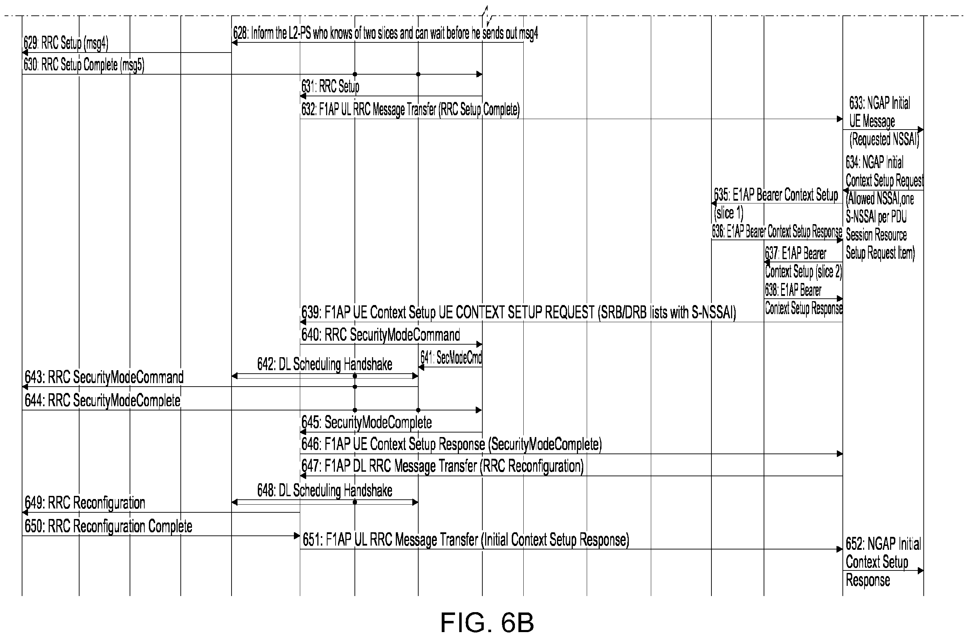

FIG. 6A and FIG. 6B illustrate an example implementation of a two-slice setup. FIG. 6A illustrates an example signal diagram 600 in accordance with the present disclosure for adding two slices in fast L3 call setup with immediate mapping to the DU-sl 1 and DU-sl 2, respectively. RACH msg3 is a new RRC Add slice request and includes two (2) slices. After the SRB0 creation in the DU-c, the SRB 1 can be set up immediately on both slices DU-sl 1 and DU-sl 2 in parallel.

The message 4 includes an RRC Add Slice Response, which as illustrated herein includes combined DU-sl 1 and DU-sl 2 responses. The same is true for message 5 the new RRC Add Slice Response Complete. After the CU-CP is informed via F1AP, also the CU-UP internal setups can be made in parallel. Therefore, the control processing in the DU-m, as well as, the CU-CP is informed early on the location of the SRB 1 processing for the first and the second slice.

In response to receiving the Add New Slice message, the core network either accepts the desired slices in a new Add slice context setup request or rejects one or the other or both slices with a NGAP UE Context Release Request. While the failure cases (e.g., no failure, slice 1 failure, slice 2 failure, or both slice 1 and 2 failure) are not illustrated in FIG. 6A, these failure cases follow the failure cases discussed in FIG. 3A and FIG. 5A. In case of a rejection of all created resources inside the first/the second or both DU-sls and in the DU-m and the DU-c are released and the UE is informed via RRC release (not illustrated in FIG. 5A). In the non-failure case, after the usual security setup steps, the RRC reconfiguration may be performed.

FIG. 6A illustrates an example implementation 600 including a two-slice fast L3 call setup with DU-c, DU-m, and immediate mapping of the DRB1 to the DU-sl 1 and of the DRB2 to the DU-sl 2. As illustrated in FIG. 6A, there is communication between a LTE; a DU-c including L1 common, L2-LO common, L2-HI common, and L2-PS; a DU-m including a CP-RT; a DU-sl 1 including a L1, L2-LO, and L2-HI; a DU-sl 2 including an L1, L2-LO, and L2-HI; a vCU including a CU-UP-sl 1 a CU-UP-sl 2, and a CU-CP; and a core network.

In step 601 of FIG. 6A, the L2-PS communicates a UL data RACH Receive to the L1 of the DU-c. As illustrated in step 602 of FIG. 6A, the L1 of the DU-c communicates a random access preamble (msg1 PRACH) to the UE. As illustrated in step 603 of FIG. 6A, the L1 of the DU-c communicates a UL data RACH receive response to the L2-PS. As illustrated in step 604 of FIG. 6A, the L2-PS communicates a DL data PDCCH send to the L1 of the DU-c. As illustrated in step 605 of FIG. 6A, the L2-PS of the DU-c communicates a PDCCH format 1_0 (RA_RNTI) to the UE. As illustrated in step 606 of FIG. 6A, the L2-PS communicates a DL data PDSCH send to the L1 of the DU-c. As illustrated in step 607 of FIG. 6A, the L1 of the DU-c communicates a PDSCH (random access msg2) (temporary C-RNTI, initial LTL grant, and TA) to the UE.

Step 608 of FIG. 6A illustrates that in accordance with the example embodiments of the disclosure, where the UE an RRC setup request (msg3 including a slice indication) (SRBO) (Call admission and add new slice) to the CP-RT of the DU-m. It is noted that any of the entities of the DU-c may be included in forwarding this message to the DU-m. As illustrated in step 609 of FIG. 6A, the CP-RT of the DU-m communicates a user setup to the L2-PS. As illustrated in step 610 of FIG. 6A, the L2-PS communicates an SRB0 context create to the L2-LO of the DU-c. As illustrated in step 611 of FIG. 6A, the L2-PS communicates an SRB0 context create response to the L2-LO of the DU-c. As illustrated in step 612 of FIG. 6A, the L2-PS communicates a user setup response (context forward) to the CP-RT.

Step 613 of FIG. 6A illustrates that, in accordance with the example embodiments of the disclosure, the CP-RT communicates an SRB1 setup (SRBO context) to the L2-HI of the DU-sl 1. As illustrated in step 614 of FIG. 6A in accordance with the example embodiments of the disclosure, the L2-HI of the DU-sl 1 communicates an SRB setup response to the CP-RT of the DU-m. As illustrated in step 615 of FIG. 6A, the CP-RT of the DU-m communicates a user context confirm to the L2-PS of the DU-c.

Step 616 of FIG. 6A illustrates that in accordance with the example embodiments of the disclosure, where the CP-RT communicates an SRB1 setup (SRBO context) to the L2-HI of the DU-sl 2. As illustrated in step 617 of FIG. 6A, in accordance with the example embodiments of the disclosure, the L2-HI of the DU-sl 2 communicates an SRB setup response to the CP-RT.

As illustrated in step 618 of FIG. 6A, the CP-RT of the DU-m communicates a user context confirm to the L2-PS of the DU-c. As illustrated in step 619 of FIG. 6A, the CP-RT of the DU-m communicates an F1AP initial UL RRC message transfer (RRC setup request) to the CU-CP of the vCU. As illustrated in step 620 of FIG. 6A, the CP-RT of the DU-m communicates an F1AP DL RRC message transfer (RRC setup) to the CU-CP of the vCU.

As illustrated in step 621 of FIG. 6A, the CP-RT of the DU-m communicates an RRC setup to the L2-HI of the DU-sl 1. As illustrated in step 622 of FIG. 6A, the CP-RT of the DU-m communicates an RRC setup to the L2-HI of the DU-sl 2. As illustrated in step 623 of FIG. 6A, the L2-HI communicates an RRC setup to the L2-LO of the DU-sl 1. As illustrated in step 624 of FIG. 6A, the L2-HI communicates an RRC setup to the L2-LO of the DU sl 2. As illustrated in step 625 of FIG. 6A, the L2-LO communicates an RRC setup to the L1 of the DU-sl 2.

Step 626 of FIG. 6A illustrates communication in accordance with example embodiments of the disclosure, where the L1 of the DU-sl 1 communicates to the L2-PS of the DU-c that the L1 is aware of two slices and can wait before sending out message 4 (msg4). As illustrated in step 627 of FIG. 6A, the L2-LO communicates an RRC setup to the L1 of the DU-sl 2.

FIG. 6B illustrates further embodiments of FIG. 6A. Step 628 of FIG. 6B illustrates communication in accordance with example embodiments of the disclosure, where the L1 of the DU-sl 2 communicates to the L2-PS of the DU-c to inform the L2-PS that L1 knows of two slices and can wait before sending out message 4 (msg4). As illustrated in step 629 of FIG. 6B there is between the L2-PS of the DU-c and the UE an RRC setup (msg4). As illustrated in step 630 of FIG. 6B, the UE communicates an RRC setup complete (msg5) to the L2-HI of the DU-sl 1. As illustrated in step 631 of FIG. 6B, the L2-HI of the DU-sl 1 communicates an RRC setup to the CP-RT of the DU-m. As illustrated in step 632 of FIG. 6B, the CP-RT of the DU-m communicated an F1AP UL RRC message transfer (RRC setup complete) to the CU-CP of the vCU.

As illustrated in step 633 of FIG. 6B, the CU-CP of the vCU communicates an NGAP initial UE message (requested NSSAI) to the core network. As illustrated in step 634 of FIG. 6B, the core network communicates an NGAP initial context setup request (allowed NSSAI), one S-NSSAI per packet data unit (PDU) session resource setup request item to the CU-CP of the vCU. As illustrated in step 635 of FIG. 6B, the CU-CP communicates an E1AP bearer context setup (slice 1) to the CU-UP-sl 1 of the vCU. As illustrated in step 636 of FIG. 6B, the CU-UP-sl 1 communicates an E1AP bearer control setup response to the CU-CP of vCU.

As illustrated in step 637 of FIG. 6B, the CU-CP communicates an E1AP bearer control setup (slice 2) to the CU-UP-sl 2. As illustrated in step 638 of FIG. 6B, the CU-UP-sl 2 communicates an E1AP bearer context setup response to the CU-CP of the vCU. As illustrated in step 639 of FIG. 6B, the CU-CP of the vCU communicates of an F1AP UE context setup UE CONTEXT SETUP REQUEST (SRB/DRB lists with S-NSSAI) to the CP-RT of the DU-m. As illustrated in step 640 of FIG. 6B, the CP-RT of the DU-m communicated an RRC security mode command (securitymodecommand) to the L2-HI of the DU-sl 1.

As illustrated in step 641 of FIG. 6B, the L2-HI communicates an SecModeCmd to the L2-LO of the DU-sl 1. As illustrated in step 642 of FIG. 6B, the L2-PS of the DU-c performs a DL scheduling handshake with the L2-LO of the DU-sl 1 and L1 of the DU-sl 1. As illustrated in step 643 of FIG. 6B, the L2-LO of the DU-sl 1 communicates an RRC security mode command to the UE. It is noted that any one or more of the elements of the DU-sl 1, e.g., L1, can be involved in step 644. As illustrated in step 644 of FIG. 6B, the UE communicates an RRC security mode complete to the L2-HI of the DU-sl 1. As illustrated in step 645 of FIG. 6B, the L2-HI of the DU-sl 1 communicates a security mode complete to the CP-RT of the DU-m.

As illustrated in step 646 of FIG. 6B, the CP-RT of the DU-m communicates an F1AP UE context setup response (securitymodecomplete) to the CU-CP of the vCU. As illustrated in step 647 of FIG. 6B, the CU-CP of the vCU communicates an F1AP DL RRC message transfer (RRC reconfiguration) to the CP-RT of the DU-m. As illustrated in step 648 of FIG. 6B, the L2-PS of the DU-c performs a DL scheduling handshake with the L2-LO of the DU-sl 1 and the L1 of the DU-sl 1.

As illustrated in step 649 of FIG. 6B, the CP-RT of the DU-m communicates an RRC reconfiguration to the UE. As illustrated in step 650 of FIG. 6, the UE communicates RRC reconfiguration complete to the CP-RT of the DU-m. As illustrated in step 651 of FIG. 6B, the CP-RT of the DU-m communicates an F1AP UL RRC message transfer (initial context setup response) to the CU-CP of the vCU. As illustrated in step 652 of FIG. 6B, the CU-CP of vCU communicates that NGAP initial context setup is complete to the core network.

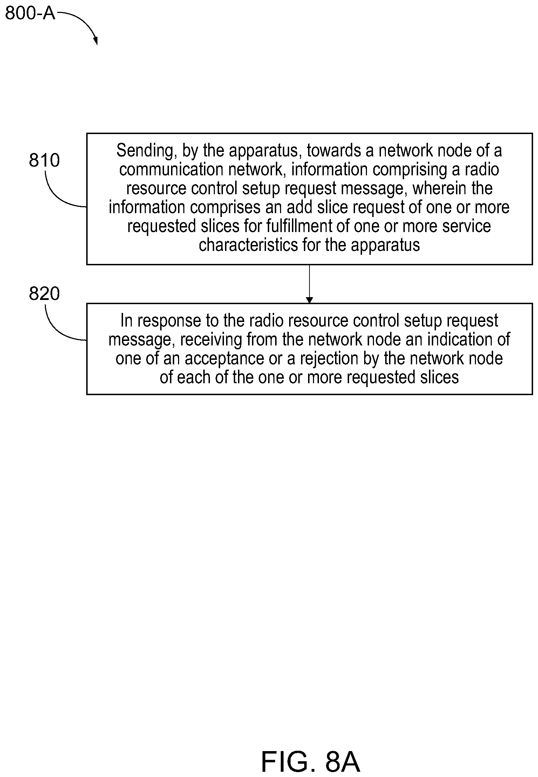

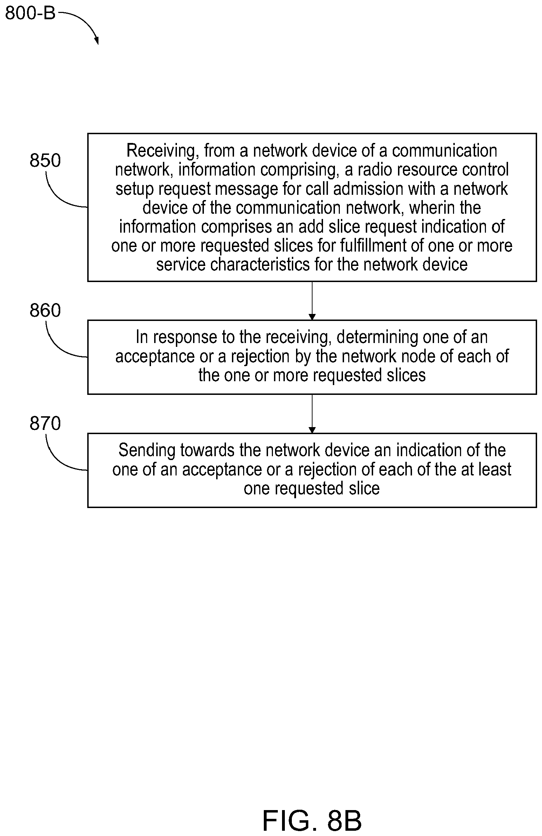

FIG. 8A and FIG. 8B illustrate processes 800-A and 800-B, respectively, in accordance with example embodiments of the disclosure which may be performed by an apparatus. FIG. 8A illustrates process 800-A operations which may be performed by an apparatus, such as, but not limited to, a network device (e.g., the UE 710 of FIG. 7). As illustrated at block 810 of FIG. 8A, there is sending, by an apparatus, of a radio resource control setup request message, wherein the information comprises an add slice request indication of at least one requested slice for fulfillment of at least one service characteristic for the apparatus. As illustrated at block 820 of FIG. 8A, in response to the radio resource control setup request message, receiving from the network node an indication of one of an acceptance or a rejection by the network node of each of the at least one requested slice.

In accordance with the example embodiments as described in the paragraph above, wherein the indication comprises an indication of an association of a context to a slice specific distributed unit component

In accordance with the example embodiments as described in the paragraph above, wherein the add slice request indication comprises an indication of a single slice the apparatus requests to join or an indication of a set of slices the apparatus requests to join.

In accordance with the example embodiments as described in the paragraphs above, wherein the add slice request indication comprises an indication of service latency.

In accordance with the example embodiments as described in the paragraphs above, wherein the indication of service latency comprises a single bit indicating one of delay-sensitivity or delay-tolerance.

In accordance with the example embodiments as described in the paragraphs above, wherein the add slice request indication is sent using an information element.

In accordance with the example embodiments as described in the paragraphs above, wherein the radio resource control setup request message is provided with a message 3 of a random access channel process associated with the radio resource control setup.

In accordance with the example embodiments as described in the paragraphs above, wherein there is receiving from the network node an indication of one of an acceptance or a rejection by the network node of each of the at least one requested slice.

In accordance with the example embodiments as described in the paragraphs above, wherein in case of rejection the indication is that all created resources for the rejected slices inside at least one distributed unit of the network node are released

In accordance with the example embodiments as described in the paragraphs above, wherein the notice is using one of a radio resource control release message or a next generation application protocol user equipment context release request message.

In accordance with the example embodiments as described in the paragraphs above, wherein in case of acceptance the notice is that after at least one security setup step, the indication is that a radio resource reconfiguration will occur.

In accordance with the example embodiments as described in the paragraphs above, wherein there is, based on acceptance of at least one requested slice, receiving from the network node at least one of a call setup message or a radio resource control add slice response complete message.

A non-transitory computer-readable medium (e.g., MEM 710B of FIG. 7) storing program code (e.g., the PROG 710C of FIG. 7), the program code executed by at least one processor (e.g., the DP 710A of FIG. 7) to perform the operations as at least described in the paragraphs above.

In accordance with an example embodiment of the disclosure as described above there is an apparatus comprising: means for sending (e.g., the one or more TRANS 710D, MEM 710B, PROG 710C, and DP 710A of FIG. 7), by an apparatus (e.g., the LTE 710 of FIG. 7) of a communication network (e.g., the network 701 of FIG. 7), information comprising a radio resource control setup request message, wherein the information comprises an add slice request indication (e.g., one or more TRANS 710D, MEM 710B, PROG 710C, and DP 710A of FIG. 7) of at least one requested slice for fulfillment of at least one service characteristic for the apparatus; and based on the radio resource control setup request message, receiving (e.g., the one or more TRANS 710D, MEM 710B, PROG 710C, and DP 710A of FIG. 7) from the network node an indication of one of an acceptance or a rejection by the network node of each of the at least one requested slice.

In the example aspect of the disclosure according to the paragraph above, wherein at least the means for sending and receiving comprises a non-transitory computer readable medium (e.g., the MEM 710B of FIG. 7) encoded with a computer program (e.g., the PROG 710C of FIG. 7) executable by at least one processor (e.g., the DP 710A of FIG. 7).

FIG. 8B illustrates process 800-B operations which may be performed by a device such as, but not limited to, a device such as network node (e.g., the NN 712 of FIG. 7). As illustrated in block 850 of FIG. 8B, the process 800-B includes receiving, by an apparatus from a network device of a communication network, information comprising a radio resource control setup request message for call admission with a network device of the communication network, wherein the information comprises an add slice request indication of one or more requested slice for fulfillment of one or more service characteristic for the network device. As illustrated in block 860 of FIG. 8B, the process 800-B includes, in response to the receiving, determining one of an acceptance or a rejection by the network node of each of the one or more requested slices. As illustrated in block 870 of FIG. 8B, the process 800-B includes sending towards the network device an indication of the one of an acceptance or a rejection of each of the one or more requested slices.

In accordance with the example embodiments as described in the paragraph above, wherein the add slice request indication comprises an indication of a single slice the network device requests to join or an indication of a set of slices the network device requests to join.

In accordance with the example embodiments as described in the paragraphs above, wherein the add slice request indication comprises an indication of service latency.

In accordance with the example embodiments as described in the paragraphs above, wherein the indication of service latency comprises a single bit indicating one of delay-sensitivity or delay-tolerance.

In accordance with the example embodiments as described in the paragraphs above, wherein the add slice request indication is received using an information element.

In accordance with the example embodiments as described in the paragraphs above, wherein the radio resource control setup request message is received with a message 3 of a random access channel process associated with the radio resource control setup.

In accordance with the example embodiments as described in the paragraphs above, wherein in case of rejection, the indication is that all created resources inside at least one of a first distributed unit or a second distributed unit of the network node are released.

In accordance with the example embodiments as described in the paragraphs above, wherein the notice is using one of a radio resource control release message or a next generation application protocol user equipment context release request message.

In accordance with the example embodiments as described in the paragraphs above, wherein in case of acceptance the notice is that after at least one security setup step, the indication is that a radio resource reconfiguration will occur.

In accordance with the example embodiments as described in the paragraphs above, wherein the determining comprises after creation of a first signaling radio bearer in a first distributed unit, performing setup of a second signaling radio bearer at a first distributed unit slice for processing of a slice for the network device.

In accordance with the example embodiments as described in the paragraphs above, wherein there is informing a control plane of a central unit user plane of the network node of a location of the first signaling radio bearer for the processing of the slice.

In accordance with the example embodiments as described in the paragraphs above, wherein the determining comprises: based on a next generation application protocol user equipment initial context setup procedure determining the one of an acceptance or a rejection by the network node of each of the at least one requested slice; and sending with the next generation application protocol user equipment context release request message the indication of the one of an acceptance or a rejection.

In accordance with the example embodiments as described in the paragraphs above, wherein the indication of the one of an acceptance or rejection is sent in a message 4 of a random access channel process associated with the radio resource control setup.

In accordance with the example embodiments as described in the paragraphs above, wherein there is sending, towards the network device, at least one of a call setup message or a radio resource control add slice response complete message.

A non-transitory computer-readable medium (e.g., MEM 712B and/or MEM 713B of FIG. 7) storing program code (e.g., PROG 712C and/or PROG 713C of FIG. 7), the program code executed by at least one processor (e.g., DP 712A and/or DP 713A of FIG. 7) to perform the operations as at least described in the paragraphs above.

In accordance with an example embodiment of the disclosure as described above there is an apparatus comprising: means for receiving (e.g., one or more transceivers 712D and/or 713D, DP 712A and/or DP 713A, DP 712A and/or DP 713A, PROG 712C and/or PROG 713C, and MEM 712B and/or MEM 713B of FIG. 7), by an apparatus (e.g., NN 712 and/or NN 713 of FIG. 7) of a communication network (e.g., the network 701 of FIG. 7), from a network device (e.g., the LTE 710 of FIG. 7) information comprising a radio resource control setup request message for call admission with a network device of the communication network, wherein the information comprises an add slice request indication of at least one requested slice for fulfillment of at least one service characteristic for the network device; means, based on the receiving, for determining (e.g., the one or more transceivers 712D and/or 713D, DP 712A and/or DP 713A, DP 712A and/or DP 713A, PROG 712C and/or PROG 713C, and MEM 712B and/or MEM 713B of FIG. 7) one of an acceptance or a rejection by the network node of each of the at least one requested slice; and means for sending (e.g., the one or more transceivers 712D and/or 713D, DP 712A and/or DP 713A, DP 712A and/or DP 713A, PROG 712C and/or PROG 713C, and MEM 712B and/or MEM 713B of FIG. 7) towards the network device an indication of the one of an acceptance or a rejection of each of the at least one requested slice.

In the example aspect of the disclosure according to the paragraph above, wherein at least the means for receiving, determining, and sending comprises a non-transitory computer readable medium (e.g., the MEM 712B and/or MEM 713B of FIG. 7) encoded with a computer program (e.g., the PROG 712C and/or PROG 713C of FIG. 7) executable by at least one processor (e.g., the DP 712A and/or DP 713A of FIG. 7).

Advantages in accordance with example embodiments of the disclosure include faster setup (in L3 call setup approximately 20% of the messages running over midhaul are saved) of the needed processing resources at the optimal location depending on slice requirements. Advantages in accordance with example embodiments of the disclosure further include relaxed resource requirements for space and power constrained on-prem location processing capabilities. Advantages in accordance with example embodiments of the disclosure include support of cloud RAN in fulfilling ultra reliable low latency (URLLC) requirements while leveraging pooling gains for non-URLLC traffic.

Advantages in accordance with example embodiments of the disclosure further include, but are not limited to, support for RAN as a Service (RANaaS) to realize "go as you grow" service, support for cloud RAN in improving redundancy and security through isolation of network slices, transport network resources could also be taken into account when placing the processing at the optimal location, support for realization and monetizing of DU implementations optimized for specific service types, support for using CPUs as well as special hardware accelerator inside the DU, and better scaling of traffic from the beginning on by not wasting processing resources in the beginning that are freed later due to more knowledge on the required slice.

Further, in accordance with example embodiments of the disclosure there is circuitry for performing operations in accordance with example embodiments of the disclosure as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the disclosure as described herein.

In accordance with example embodiments of the disclosure as disclosed in this application this application, the "circuitry" provided can include at least one or more or all of the following:
(a) hardware-only circuit implementations (such as implementations in only analog and/or digital circuitry);
(b) combinations of hardware circuits and software, such as (as applicable):
   (i) a combination of analog and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions, such as functions or operations in accordance with example embodiments of the disclosure as disclosed herein); and
(c) hardware circuit(s) and or processor(s), such as a microprocessor(s) or a portion of a microprocessor(s), that requires software (e.g., firmware) for operation, but the software may not be present when it is not needed for operation.

In accordance with example embodiments of the disclosure, there is adequate circuitry for performing at least novel operations in accordance with example embodiments of the disclosure as disclosed in this application, this ' circuitry" as may be used herein refers to at least the following:
(a) hardware-only circuit implementations (such as implementations in only analog and/or digital circuitry); and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions); and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the best method and apparatus presently contemplated by the inventors for carrying out the disclosure. However, various modifications and adaptations may become apparent to those skilled in the relevant arts in view of the foregoing description, when read in conjunction with the accompanying drawings and the appended claims. However, all such and similar modifications of the teachings of example embodiments of this disclosure will still fall within the scope of this disclosure.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and non-exhaustive examples.

Furthermore, some of the features of the preferred embodiments of this disclosure could be used to advantage without the corresponding use of other features. As such, the foregoing description should be considered as merely illustrative of the principles of the disclosure, and not in limitation thereof.

## Claims

1. An apparatus comprising:
at least one processor; and
at least one non-transitory memory storing instructions, that when executed by the at least one processor, cause the apparatus at least to:
send, by the apparatus, toward a network node of a communication network, information comprising a radio resource control setup request message, wherein the information comprises an add slice request of at least one requested slice for fulfillment of at least one service characteristic for the apparatus, and
based on the radio resource control setup request message, receive from the network node an indication of one of an acceptance or a rejection by the network node of each of the at least one requested slice.

2. The apparatus of claim 1, wherein the indication comprises an indication of an association of a context to a slice specific distributed unit component.

3. The apparatus of claim 1, wherein the add slice request comprises an indication of a single slice the apparatus requests to join or an indication of a set of slices the apparatus requests to join.

4. The apparatus of claim 1, wherein the add slice request comprises an indication of service latency.

5. The apparatus of claim 4, wherein the indication of service latency comprises a single bit indicating one of delay-sensitivity or delay-tolerance.

6. The apparatus according to any one of claims 2-4, wherein the add slice request indication is sent using an information element.

7. The apparatus of claim 1, wherein the radio resource control setup request message is provided with a message 3 of a random access channel process associated with the radio resource control setup.

8. The apparatus of claim 1, wherein the at least one non-transitory memory is storing instructions executed by the at least one processor to cause the apparatus at least to:
receive from the network node an indication of one of an acceptance or a rejection by the network node of each of the at least one requested slice.

9. The apparatus of claim 8, wherein in case of rejection the indication is that all created resources for the rejected slices inside at least one distributed unit of the network node are released.

10. The apparatus of claim 9, wherein the indication is using one of a radio resource control release message or a next generation application protocol user equipment context release request message.

11. The apparatus of claim 8, wherein in case of acceptance the notice is that after at least one security setup step, the indication is that a radio resource reconfiguration will occur.

12. The apparatus of claim 1, wherein the at least one non-transitory memory is storing instructions executed by the at least one processor to cause the apparatus at least to:
based on acceptance of at least one requested slice, receive from the network node at least one of a call setup message or a radio resource control add slice complete message.

13. A method comprising:
sending, by the apparatus, towards a network node of a communication network, information comprising a radio resource control setup request message, wherein the information comprises an add slice request of at least one requested slice for fulfillment of at least one service characteristic for the apparatus; and
based on the radio resource control setup request message, receiving from the network node an indication of one of an acceptance or a rejection by the network node of each of the at least one requested slice.

14. An apparatus comprising:
at least one processor; and
at least one non-transitory memory storing instructions, that when executed by the at least one processor, cause the apparatus at least to:
receive, from a network device of a communication network, information comprising a radio resource control setup request message, wherein the information comprises an add slice request indication of at least one requested slice for fulfillment of at least one service characteristic for the network device,
based on the receiving, determine one of an acceptance or a rejection by the network node of each of the at least one requested slice, and
send towards the network device an indication of the one of an acceptance or a rejection of each of the at least one requested slice.

15. A method comprising:
receiving, from a network device of a communication network, information comprising, a radio resource control setup request message for call admission with a network device of the communication network, wherein the information comprises an add slice request indication of at least one requested slice for fulfillment of at least one service characteristic for the network device;
based on the receiving, determining one of an acceptance or a rejection by the network node of each of the at least one requested slice; and based on the receiving, determining one of an acceptance or a rejection by the network node of each of the at least one requested slice.
